# EUROPÄISCHE PATENTANMELDUNG

(11) **EP 0 834 671 A1**
(43) Veröffentlichungstag der Anmeldung: **08.04.1998**
(21) Anmeldenummer: 97114016.5
(22) Anmeldetag: 14.08.1997
(51) Int. Cl.: F16D 65/34

(54) **Elektrisch betätigte Bremsanlage für Fahrzeuge**

(30) Priorität: 04.10.1996 DE 19640995
(71) Anmelder: Continental Aktiengesellschaft, 30165 Hannover (DE)
(72) Erfinder: Maron, Christof, Dr., 30989 Gehrden (DE); Hauck, Stefan, 30173 Hannover (DE); Henken, Immanuel, 31867 Lauenau (DE); Dieckmann, Thomas Dr., 30982 Pattensen (DE)

(57) **Zusammenfassung**

Die Erfindung betrifft eine elektrische Bremsanlage für ein Kraftfahrzeug, die jedem Rad des Kraftfahrzeuges zugeordnet einen Bremsaktuator 2 enthält und einen Bremsaktuator für eine elektrische Bremsanlage. Bei einem Bremsvorgang werden die Bremsbeläge 20a und 20b von einer Zuspannvorrichtung 10 des Bremsaktuators 2 an die Bremsscheibe 30 mit einer vorgegebenen Zuspannkraft gepreßt. Mindestens einer der Bremsaktuatoren 2 weist einen Sensor auf, mit dem die bei einem Bremsvorgang auftretende elastische Verformung der Zuspannvorrichtung 10 bzw. des Bremssattels 18 gemessen wird. Aus der gemessenen elastischen Verformung wird dann die Zuspannkraft bestimmt, die dann für die Regelung der Bremsanlage zur Verfügung steht.

## Beschreibung

Die Erfindung betrifft eine elektrische Bremsanlage für ein Kraftfahrzeug, insbesondere für einen Pkw, die u.a. über eine Radbremse für Jedes Rad des Kraftfahrzeuges verfügt, der jeweils ein Bremsaktuator mit u.a. einer Zuspannvorrichtung zugeordnet ist, die bei einem Bremsvorgang auf Bremsbeläge eine Zuspannkraft ausübt, wodurch an dem Rad eine Bremskraft erzeugt wird, und mit einem Element, das die ausgeübte Zuspannkraft abstützt. Die Erfindung betrifft ferner einen Bremsaktuator für eine elektrische Bremsanlage.

In jüngster Vergangenheit sind für Kraftfahrzeuge, insbesondere für Personenkraftwagen, Bremsanlagen vom Brake-By-Wire-Typ entwickelt worden. Bei derartigen Bremsanlagen wird der Bremswunsch des Fahrers durch Ausüben einer Fußkraft auf ein Bremspedal kundgetan und die Einwirkung der Fußkraft auf das Pedal wird von einem Sensor erfaßt und in ein elektrisches Signal umgewandelt. Das Signal wird an sogenannte Bremsaktuatoren weitergeleitet, von denen jeweils einer einem Rad des Kraftfahrzeuges zugeordnet ist und jeder Bremsaktuator übt u.a. mit Hilfe einer durch einen Elektromotor angetriebenen Zuspannvorrichtung eine Zuspannkraft auf die Bremsbeläge aus. Unter Einfluß der Zuspannkraft werden die Bremsbeläge an die Bremsscheibe der Radbremse angepreßt, wodurch an dem Rad des Kraftfahrzeuges eine Bremskraft erzeugt wird.

Selbstverständlich muß die Zuspannkraft, die die Zuspannvorrichtung ausübt, abhängig von dem Bremswunsch des Kraftfahrzeugfahrers eingesteuert bzw. eingeregelt werden. Eine einfachere Möglichkeit dies zu tun, besteht darin, den Elektromotoren der Bremsaktuatoren einen bestimmten Motorstrom in Abhängigkeit des Bremswunsches des Kraftfahrzeugfahrers zuzuführen, infolgedessen eine bestimmte Zuspannkraft durch die Zuspannvorrichtung der Bremsaktuatoren ausgeübt wird. Diese Möglichkeit ist jedoch insofern problematisch, als daß die Bremsaktuatoren immer eine innere Reibung aufweisen, die zu einer Hysterese in den Bremsaktuatoren führt. Aus diesem Grunde ist es nicht möglich, einem vorgegebenen Motorstrom eindeutig eine Zuspannkraft zuzuordnen, vielmehr liegt bei einem vorgegebenen Motorstrom die Zuspannkraft immer an einem unbestimmten Punkt innerhalb eines Zuspannkraftintervalls. Es kann also nur durch eine Messung der Zuspannkraft in den Bremsaktuatoren eindeutig und genau festgestellt werden, welche Zuspannkraft durch eine Zuspannvorrichtung eines Bremsaktuators bei einem vorgegebenen Motorstrom erzeugt wird. Der Meßwert kann dann dazu verwendet werden, die "Ist-Zuspannkraft" an die dem Bremswunsch des Kraftfahrzeugfahrers entsprechende "Soll-Zuspannkraft" anzupassen. Aus den genannten Gründen ist es wünschenswert, daß die Bremskraft in den Bremsaktuatoren möglichst einfach meßbar ist.

Der Erfindung liegt die Aufgabe zugrunde, eine elektrische Bremsanlage zu schaffen, in der in mindestens einem der Bremsaktuatoren die von der Zuspannvorrichtung ausgeübte Zuspannkraft einfach meßbar ist. Der Erfindung liegt ferner die Aufgabe zugrunde, einen für eine derartige Bremsanlage geeigneten Bremsaktuator zu schaffen.

Ausgehend von einer elektrischen Bremsanlage der eingangs genannten Art wird gemäß den kennzeichnenden Merkmalen des Anspruchs 1 bzw. des Anspruchs 2 die Aufgabe dadurch gelöst, daß mindestens einer der Bremsaktuatoren einen Sensor aufweist, mit dem bei einem Bremsvorgang eine elastische Verformung der Zuspannvorrichtung bzw. des Elements, das die Zuspannkraft abstützt, meßbar ist, wobei aus der gemessenen elastischen Verformung die von der Zuspannvorrichtung ausgeübte Zuspannkraft bestimmbar ist.

Die mit der Erfindung erzielten Vorteile sind insbesondere darin zu sehen, daß die von der Zuspannvorrichtung erzeugte Zuspannkraft aus der elastischen Verformung eines Bestandteiles des Bremsaktuators bestimmt wird, das ohnehin immer im Bremsaktuator vorhanden ist. Dadurch kann der Sensor aus wenigen Bestandteilen aufgebaut und vor äußeren mechanischen Belastungen gut geschützt in den Bremsaktuator integriert werden.

Gemäß einer Weiterbildung der Erfindung nach Anspruch 3 befindet sich zumindest ein Teil des Sensors innerhalb der Zuspannvorrichtung bzw. innerhalb des Elementes, das die Zuspannkraft abstützt. Der Vorteil dieser Weiterbildung ist darin zu sehen, daß der Sensor bzw. zumindest ein Teil des Sensors allseitig von der Zuspannvorrichtung bzw. von dem Element, das die Bremsbeläge trägt, umgeben ist und somit der Schutz vor äußeren mechanischen Belastungen besonders groß ist.

Gemäß einer Weiterbildung der Erfindung nach Anspruch 4 ist die Steifigkeit der Zuspannvorrichtung bzw. des Elementes, das die Bremsbeläge trägt, im Meßbereich des Sensors verringert. Dies kann z.B. durch eine Materialquerschnittsreduktion bzw. durch Einfügen eines federnden Elementes oder durch Einfügen eines Materials mit einem geringeren Elastizitätsmodul als das übrige Material der Zuspannvorrichtung bzw. des Elementes, das die Bremsbeläge trägt, geschehen. Der Vorteil dieser Weiterbildung ist darin zu sehen, daß bereits eine geringe Änderung der Zuspannkraft eine zusätzliche elastische Verformung der Zuspannvorrichtung bzw. des Elementes, das die Bremsbeläge trägt, erzeugt, die von dem Sensor meßbar ist. Die Messung ist somit besonders genau, was eine entsprechend gute Regelung der elektrischen Bremsanlage auf Basis der gemessenen "Ist-Zuspannkräfte" ermöglicht.

Gemäß einer Weiterbildung der Erfindung nach Anspruch 5 ist der Sensor derartig in den Bremsaktuator eingebaut, daß im kraftfreien Zustand der Zuspannvorrichtung ein eineindeutiges Meßsignal von ihm erzeugt wird, das sich von den erzeugten Meßsignalen, wenn die Zuspannvorrichtung eine Zuspannkraft ausübt, deutlich unterscheidet. Der Vorteil dieser Weiterbildung ist darin zu sehen, daß der kraftfreie Zustand der Zuspannvorrichtung sicher erkannt wird. Es können dann folgende Situationen nicht auftreten: Von dem Sensor wird eine elastische Verformung und damit eine Zuspannkraft (aufgrund von Meßungenauigkeiten) erfaßt, obwohl von der Zuspannvorrichtung tatsächlich keine Zuspannkraft ausgeübt wird. In diesem Fall würde die Zuspannvorrichtung von dem Elektromotor des Bremsaktuators solange weiter zurückgefahren, bis von dem Sensor eine elastische Verformung von identisch 0 und damit eine Kraftfreiheit der Zuspannvorrichtung angezeigt wird. Dies kann ggf. zu Beschädigungen des Bremsaktuators führen. Es ist durch diese Weiterbildung ferner dem Fall sicher vorgebeugt, daß von dem Sensor (wiederum aufgrund von Meßungenauigkeiten) keine elastische Verformung und damit die Kraftfreiheit der Zuspannvorrichtung angezeigt wird, obwohl diese auf die Bremsbeläge noch Zuspannkraft ausübt. Aufgrund der fehlerhaften Anzeige des Sensors wird dann also die Zuspannvorrichtung von dem Elektromotor nicht weiter zurückgefahren, so daß die Bremsbeläge ständig an der Bremsscheibe der Bremse schleifen. Zusammenfassend läßt sich sagen, daß durch die Weiterbildung einer Zerstörung eines Bremsaktuators bzw. einem übermäßigen Verschleiß der Bremsbeläge sicher vorgebeugt ist.

Eine sichere Anzeige des kraftfreien Zustandes der Zuspannvorrichtung durch den Sensor läßt sich dadurch erreichen, daß der Sensor aus mindestens zwei Teilen aufgebaut ist, wobei ein Meßsignal von dem Sensor nur dann erzeugt wird, wenn sich ein Teil des Sensors im Wirkbereich des anderen Teiles des Sensors befindet und wobei der Sensor derartig in dem Bremsaktuator eingebaut ist, daß sich der eine Teil des Sensors im kraftfreien Zustand der Zuspannvorrichtung nicht im Wirkbereich des anderen Teiles des Sensors befindet, wie es auch in Anspruch 6 beansprucht ist. Eine Herausführung des ersten Teils des Sensors aus dem Wirkbereich des zweiten Teils des Sensors im kraftfreien Zustand der Zuspannvorrichtung kann beispielsweise dadurch erreicht werden, daß der erste Teil des Sensors mit einer Feder in Wirkverbindung steht, die bei Ausüben einer Zuspannkraft durch die Zuspannvorrichtung zusammengedrückt wird und den ersten Teil des Sensors in den Wirkbereich des zweiten Teils des Sensors drückt und bei kraftfreiem Zustand der Zuspannvorrichtung den ersten Teil des Sensors aus dem Wirkbereich des zweiten Teil des Sensors "herausdrückt".

Ein Ausführungsbeispiel und weitere Vorteile der Erfindung werden im Zusammenhang mit den nachstehenden Figuren erläutert, darin zeigt:
- Figur 1: einen Bremsaktuator im Längsschnitt
- Figur 2: einen Bremsaktuator im Längsschnitt
- Figur 3: einen Bremsaktuator im Längsschnitt
- Figur 4: einen Bremsaktuator im Längsschnitt.
- Figur 5: einen Bremsaktuator im Längsschnitt
- Figur 6: einen Bremsaktuator im Längsschnitt

Bei den nun folgenden Erläuterungen der Ausführungsbeispiele wird durchgehend auf eine Scheibenbremse Bezug genommen, das heißt insbesondere, daß das Element, das die Zuspannkräfte abstützt, als Bremssattel ausgebildet ist. Es wird jedoch ausdrücklich darauf hingewiesen, daß die Erfindung nicht auf Scheibenbremsen beschränkt ist, sondern auch für Trommelbremsen verwendbar ist.

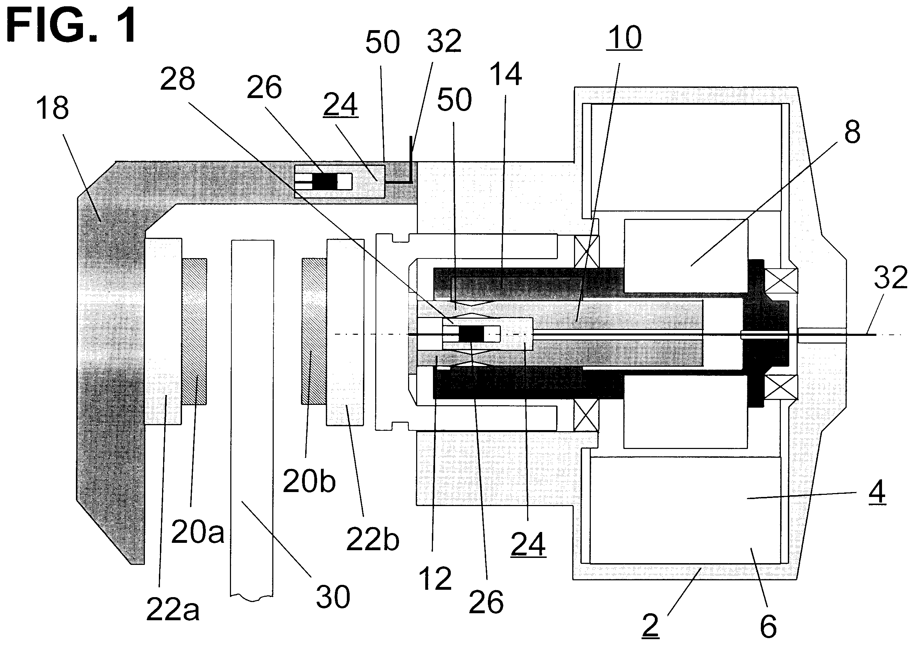

Figur 1 zeigt im Längsschnitt in systematischer Darstellung und nicht maßstabsgetreu einen Bremsaktuator 2, der mit einem Bremssattel 18, der die Bremsbeläge 20a und 20b trägt, in Wirkverbindung steht. Die Funktionsweise derartiger Bremsaktuatoren 2 ist an sich bekannt, so daß sie hier nur kurz erläutert werden soll. Der Bremsaktuator 2 enthält einen Elektromotor 4, bestehend aus einem Stator 6 und einem Rotor 8, mit dessen Hilfe die Spindelmutter 14 in eine Drehbewegung um eine Achse versetzt werden kann, die durch die Spindel 12 vorgegeben ist. Die Drehbewegung der Spindelmutter 14 bewirkt eine axiale Bewegung der Spindel 12 und eine axiale Bewegung des Bremskolbens 16. Dadurch werden bei einem Bremsvorgang, die mit dem Bremskolben 16 in Wirkverbindung stehenden Bremsbeläge 20a und 20b ebenfalls in eine axiale Bewegung versetzt, so daß die Bremsbeläge 20a und 20b schließlich nach Durchlaufen eines Luftspaltes an der Bremsscheibe 30 anliegen und eine Bremskraft hervorrufen. Die Bremskraft ist abhängig von der Zuspannkraft, die von der Spindel 12 auf den Bremskolben 16 ausgeübt wird. Nach einem Bremsvorgang werden die Bremsbeläge 20a und 20b, der Bremskolben 16 und die Spindel 12 durch Rückstellkräfte bzw. durch umgekehrten Antrieb des Elektromotors 4 in ihre Ausgangslage zurückbewegt.

Die von der Zuspannvorrichtung 10, insbesondere von der Spindel 12, über den Bremskolben 16 auf die Bremsbeläge 20a und 20b ausgeübte Zuspannkraft führt in der Spindel 12 bzw. in dem Bremssattel 18 zu einer Kraft, die betragsmäßig genauso groß ist wie die Zuspannkraft, jedoch in die entgegengesetzte Richtung weist. Diese Kraft führt zu einer elastischen Verformung der Zuspannvorrichtung 10, insbesondere der Spindel 12, bzw. zu einer elastischen Verformung des Bremssattels 18, die mit Hilfe eines Sensors 24 meßbar ist. Dazu ist der Sensor 24 entweder in einem dafür vorgesehenen Hohlraum der Spindel 12 derartig angeordnet, daß die Spindel 12 den Sensor 24 koaxial umfaßt, oder aber der Sensor 24 befindet sich in einem dafür vorgesehenen Hohlraum des Bremssattels 18. Aus der von dem Sensor 24 gemessenen elastischen Verformung der Zuspannvorrichtung 10, insbesondere der Spindel 12 bzw. des Bremssattels 18 ist die auf die Bremsbeläge 20a und 20b aufgebrachte Zuspannkraft direkt bestimmbar. Die zu messende elastische Verformung kann vergrößert werden, indem im Bereich 50 des Sensors 24 die Steifigkeit der Spindel 12 bzw. des Bremssattels 18 durch Einfügen eines federnden Elementes gezielt verringert wird. Dies kann z.B. durch eine Federscheibe oder durch das Einfügen eines Materials mit einem geringeren Elastizitätsmodul in den Bereich 50, als es das umliegende Material aufweist, geschehen. Eine weitere Möglichkeit besteht darin, im Bereich 50 eine Materialquerschnittsreduktion vorzunehmen, wie es auch in Fig. 1 gezeigt ist.

Der in der Figur 1 gezeigte Sensor 24 ist als LVDT-Sensor ausgebildet, dessen Funktionsprinzip dem Fachmann an sich bekannt ist, so daß es hier nur kurz erläutert werden soll (LVDT-Sensor steht für Linear Variable Differential Transformer; solche Sensoren werden z. B. von den Firmen Lucas Schaevitz und Mikro-Epsilon vertrieben).
Durch die elastische Verformung der Zuspannvorrichtung 10, insbesondere der Spindel 12 bzw. durch die elastische Verformung des Bremssattels 18 "taucht" der ferromagnetische Kern 26 tiefer in den Spulenkörper des LVDT-Sensors 24 ein und infolgedessen ändert sich das an der Anschlußleitung 32 anliegende Meßsignal.

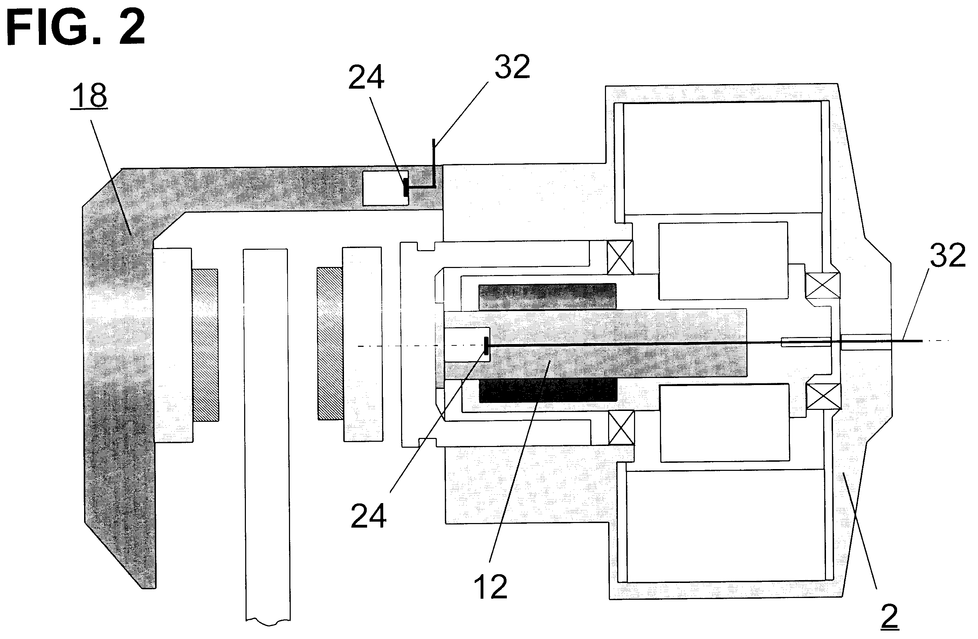

Figur 2 zeigt einen Bremsaktuator 2 mit einem dazu in Wirkverbindung stehenden Bremssattel 18, der an sich genauso aufgebaut ist, wie der in der Figur 1 gezeigte Bremsaktuator 2. Der einzige Unterschied ist darin zu sehen, daß der in dem Hohlraum der Spindel 12 der Zuspannvorrichtung 10 bzw. in dem Hohlraum des Bremssattels 18 untergebrachte Sensor 24 einen anderen Aufbau und eine andere Funktionsweise aufweist, die im folgenden erläutert wird. Der in der Spindel 12 bzw. in dem Bremssattel 18 enthaltene Hohlraum ist mit einem Fluid gefüllt und enthält einen Drucksensor 24, der bevorzugt an einer Wand des Hohlraums befestigt ist und dessen Signale über eine Anschlußleitung 32 ausgewertet werden. Infolge eines Bremsvorganges kommt es zu einer elastischen Verformung der Spindel 12 bzw. des Bremssattels 18, so daß sich das Hohlraumvolumen des Hohlraums in der Spindel 12 bzw. in dem Bremssattel 18 verringert und der Druck in dem Fluid ansteigt.

Der Druckanstieg wird von dem Drucksensor 24 registriert und ein entsprechendes Signal wird auf die Anschlußleitung 32 gegeben und ausgewertet, so daß aus dem Signal die elastische Verformung und damit die aufgebrachte Zuspannkraft bestimmbar ist.

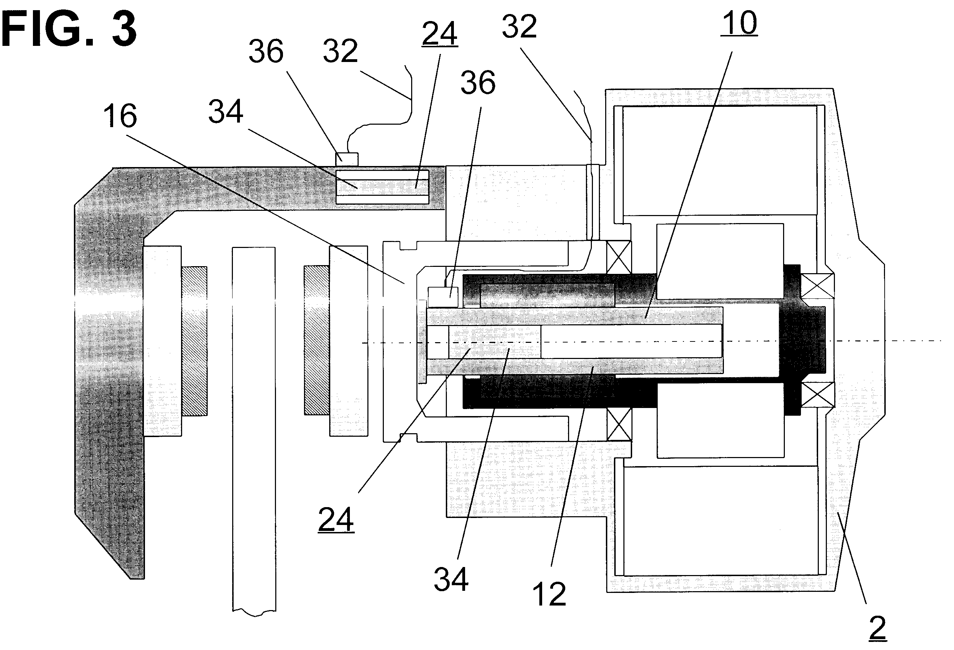

Figur 3 zeigt einen Bremsaktuator 2, der ebenfalls an sich genauso aufgebaut ist wie der in der Figur 1 gezeigte Bremsaktuator 2 und ebenfalls mit einem Bremssattel 18 in Wirkverbindung steht. Der einzige Unterschied besteht darin, daß der Sensor 24 einen anderen Aufbau und eine andere Funktionsweise aufweist, die im folgenden erläutert wird. Hierbei wird auf eine ausführliche Erläuterung verzichtet, da der Sensor an sich bekannt und in der Veröffentlichung SAE Technical Paper Series 910856 ausführlich beschrieben ist. Der Sensor 24 enthält einen permanent magnetischen Kern, der von der Spindel 12 konzentrisch umfaßt wird. Die Spindel 12 ist im Bereich des permanentmagnetischen Kerns 34 aus ferromagnetischem Material gefertigt, dessen magnetische Bezirke unter Einfluß des permanentmagnetischen Kerns 34 in eine bevorzugte Richtung ausgerichtet werden, so daß durch das ferromagnetische Material der Spindel 12 in dem Bereich des permanentmagnetischen Kerns 34 ein Magnetfeld entsteht, das das durch den permanentmagnetischen Kern 34 erzeugte Magnetfeld gemäß dem Superpositionsprinzip überlagert. Kommt es aufgrund eines Bremsvorganges zu einer elastischen Verformung der Zuspannvorrichtung 10, insbesondere der Spindel 12, so ändert sich unter Einfluß des Druckes, der bei dieser elastischen Verformung auf den ferromagnetischen Bereich der Spindel 12 ausgeübt wird, durch Verlagerung der magnetischen Bezirke in diesem Bereich das Magnetfeld. Infolgedessen kommt es zu einer Änderung des Gesamtmagnetfeldes, die von einem Hall-Sensor 36 registriert wird. Ein entsprechendes Signal wird auf die Anschlußleitung 32 gegeben und aus dem Signal des Hall-Sensors 36 wird die bei dem Bremsvorgang ausgeübte Zuspannkraft bestimmt.

Der besondere Vorteil des in der Figur 3 gezeigten Ausführungsbeispiels besteht darin, daß sich der Hall-Sensor 36 außerhalb der Spindel 12 befindet und somit eine Führung der Anschlußleitung 32 in der Spindel 12 entfällt. Dennoch ist der Hall-Sensor 36 gut vor äußeren mechanischen Belastungen geschützt, da er von dem Bremskolben 16 umfaßt wird.

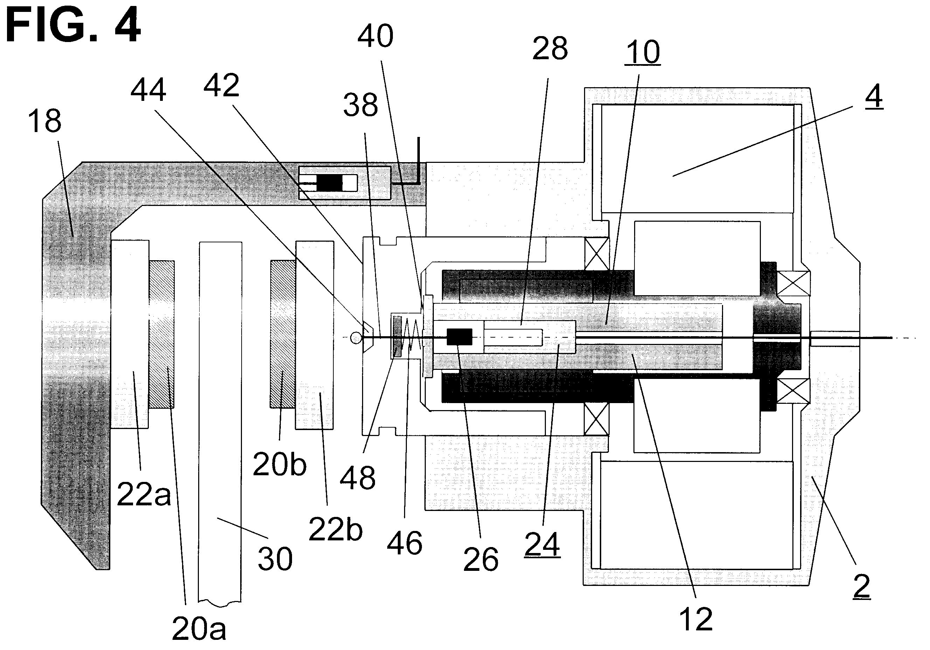

Figur 4 zeigt einen Bremsaktuator 2, der ebenfalls genauso aufgebaut ist wie der in der Figur 1 gezeigte Bremsaktuator und mit einem Bremssattel 18 in Wirkverbindung steht. Der in einem Hohlraum der Spindel 12 der Zuspannvorrichtung 10 angeordnete Sensor 24 ist gegenüber dem in der Figur 1 gezeigten Sensor 24 derart modifiziert, daß mit Hilfe des Sensors 24 sicher der kraftfreie Zustand der Spindel 12 und damit das Abheben der Bremsbeläge 20a und 20b von der Bremsscheibe 30 festgestellt werden kann. Dazu wird die Stange 38, mit deren Hilfe der weichmagnetische Kern 26 in dem Spulenkörper 28 "geführt" wird, durch eine erste Bohrung in der Stirnfläche 40 der Spindel 12 und durch eine zweite Bohrung in der Stirnfläche 42 des Bremskolbens 16 geführt. Die Stange 38 ist so lang ausgebildet, daß das dem weichmagnetischen Kern 26 abgewandte Ende der Stange 38 im kraftfreien Zustand der Zuspannvorrichtung 10, insbesondere der Spindel 12 über die Stirnfläche 42 des Bremskolbens 16 hinausragt und in dem Luftspalt liegt, der zwischen dem Bremsbelagträger 22b und der Stirnfläche 42 des Bremskolbens 16 entsteht.

Bei einem Bremsvorgang geschieht nun folgendes: Die Spindel 12 der Zuspannvorrichtung 10 und damit der Bremskolben 16 wird in eine axiale Bewegung versetzt, so daß nach Durchlaufen des Luftspaltes zwischen dem Bremsbelagträger 22b und der Stirnfläche 42 des Bremskolbens 16 die Stirnfläche 42 an der Rückseite des Bremsbelagträgers 22b anliegt. Bei der axialen Bewegung des Bremskolbens 16 in Richtung des Bremsbelagträgers 22b wird die Stange 38 in die Vertiefung 44 des Bremskolbens 16 geschoben. Dabei bewegt sich der an der Stange 38 befindliche Anschlag 48 auf den Elektromotor 4 zu und drückt die Feder 46 zusammen. Durch die Bewegung der Stange 38 taucht der weichmagnetische Kern 26 des Sensors 24 in den Wirkbereich des Spulenkörpers 28 ein und erst dann wird von dem Sensor 24 ein Signal erzeugt. Eine weitere Erhöhung der Zuspannkraftführt zu einer elastischen Verformung der Zuspannvorrichtung 10, insbesondere der Spindel 12, die, wie bereits im Zusammenhang mit der Figur 1 erläutert, von dem Sensor 24 registriert wird.

Bei Beendigung des Bremsvorganges bewegt sich die Spindel 10 der Zuspannvorrichtung 12 und damit der Bremskolben 16 in axialer Richtung von dem Bremsbelagträger 22b weg, so daß zwischen der Rückseite des Bremsbelagträgers 22b und der Stirnfläche 42 des Bremskolbens 16 wiederum ein Luftspalt entsteht. In dem Moment, wo die Stirnfläche 42 von der Rückseite des Belagträgers 22b abhebt, beginnt sich die zusammengedrückte Feder 46 zu entspannen und "schiebt" das von dem weichmagnetischen Kern 26 abgewandte Ende der Stange 38 wieder in den Luftspalt,so daß nach dem Bremsvorgang wieder die in der Figur 4 gezeigte Ausgangsposition entsteht und sich der weichmagnetische Kern 26 nicht mehr im Wirkbereich des Spulenkörpers 28 befindet. Somit wird in dem kraftfreien Zustand der Zuspannvorrichtung 10, insbesondere der Spindel 12, sicher kein Signal (bzw. ein eineindeutiges Signal) von dem Sensor 24 erzeugt und die "gelöste" Bremse (also die von der Bremsscheibe 30 abgehobenen Bremsbeläge 20a und 20b) wird sicher angezeigt. Der kraftfreie Zustand wird zwar nur dadurch angezeigt, daß zwischen dem Bremsbelagträger 22b und dem Bremskolben 16 ein Luftspalt vorhanden ist, jedoch ist dann auch sichergestellt, daß die Bremsbeläge 20a und 20b tatsächlich von der Bremsscheibe 30 (z.B. wegen des Bremsscheibenschlages) abgehoben haben.

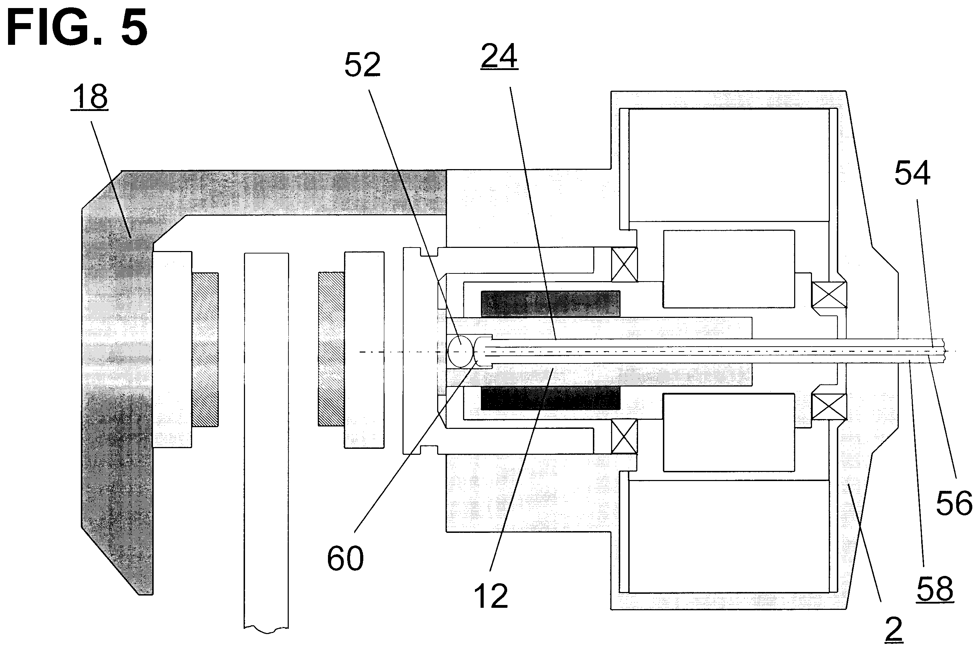

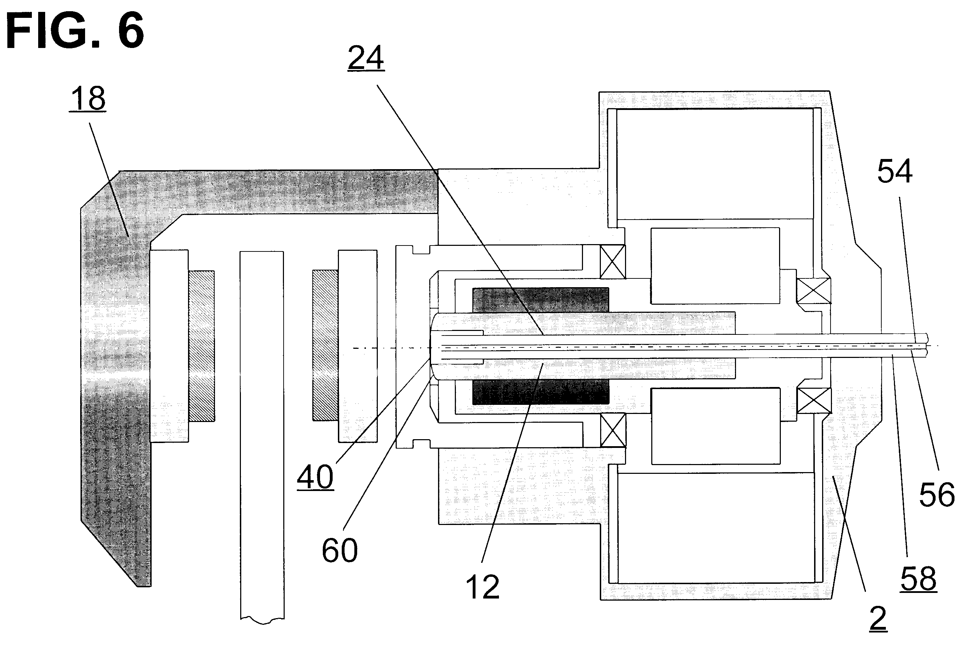

Gemäß einem weiteren Ausführungsbeispiel der Erfindung enthält der Sensor 24 eine reflektierende Membran 60, auf die Licht geführt wird, das an der Membran 60 reflektiert wird. Die Membran 60 wird infolge der elastischen Verformung der Zuspannvorrichtung 10 bzw. des Bremssattels 18 ebenfalls verformt oder aus ihrer Ruhelage verschoben, wodurch sich wiederum die Reflexion des Lichtes an der Membran verändert (z.B. verändert sich bei einer Verformung der Reflexionswinkel des Lichtes). Die Änderung der Reflexion steht in einem eineindeutigen Zusammenhang mit der Verformung der Zuspannvorrichtung 10 bzw. des Bremssattels 18. Im Zusammenhang mit den Figuren 5 und 6 wird erläutert, wie der Sensor 24, der eine reflektierende Membran enthält, beispielsweise aufgebaut sein kann.

Figur 5 zeigt einen Bremsaktuator 2, der ebenfalls genauso aufgebaut ist wie der in der Figur 1 gezeigte Bremsaktuator und mit einem Bremssattel 18 in Wirkverbindung steht. Die Spindel 12 des Bremsaktuators 2 weist einen Hohlraum auf, in dem sich ein Koppelglied 52, hier in Form einer Kugel, befindet. Die Kugel 52 steht in Wirkverbindung mit einer reflektierenden Membran 60 des Sensors 24. Neben der Membran 60 enthält der Sensor 24 weiterhin einen ersten Lichtleiter 54 und einen zweiten Lichtleiter 56, die in einem Kabel 58 verlaufen, das durch einen Kanal in Spindel 12 aus dem Bremsaktuator 2 herausgeführt wird. In das Ende des ersten Lichtleiters 54, das sich außerhalb des Bremsaktuators 2 befindet, wird beispielsweise mit Hilfe einer lichtemittierenden Diode Licht eingekoppelt. Das Licht pflanzt sich bis zum anderen Ende des ersten Lichtleiters 54, das im Hohlraum der Spindel 12 liegt, fort und tritt dort aus dem Lichtleiter 54 aus. Das austretende Licht wird von der Membran 60 des Sensors 24 reflektiert und nach der Reklektion in den zweiten Lichtleiter 56 eingekoppelt. Das Licht pflanzt sich innerhalb des zweiten Lichtleiters bis zum Ende des zweiten Lichtleiters 56, das sich außerhalb des Bremsaktuators 2 befindet, fort und tritt dort wieder aus dem Lichtleiter 56 aus. Die Intensität des aus dem zweiten Lichtleiter 56 austretenden Lichtes wird außerhalb des Bremsaktuators 2 beispielsweise mit Hilfe einer Photodiode gemessen.

Bei einem Bremsvorgang geschieht nun folgendes: Die Spindel 12 der Zuspannvorrichtung 10 wird elastisch verformt und infolgedessen wird von der Kugel 52 auf die Membran 60 eine Kraft ausgeübt, wodurch diese verformt wird. Infolge der Verformung ändert sich der Anteil des Lichtes, der nach der Reflektion an der Membran 60 in den zweiten Lichtleiter 56 eingekoppelt wird. Am Ausgang außerhalb des Bremsaktuators 2 des zweiten Lichtleiters 56 wird mit Hilfe der Photodiode also eine Lichtintensität gemessen, die sich von der Lichtintensität des nicht betätigten Bremsaktuators 2 unterscheidet. Die Verformung der Membran 60 und damit die Änderung der gemessenen Lichtintensität steht in einem eindeutigen Zusammenhang zu der Zuspannkraft, die mit Hilfe der Spindel 12 auf die Bremsbeläge 20a und 20b ausgeübt wird. Somit lässt sich mit Hilfe des im Zusammenhang mit der Figur 5 beschriebenen Sensors die ausgeübte Zuspannkraft ermitteln.

Figur 6 zeigt einen Bremaktuator 2, der ebenfalls genauso aufgebaut ist wie der in der Figur 1 gezeigte Bremsaktuator und mit einem Bremssattel 18 in Wirkverbindung steht. Der in der Figur 6 gezeigte Sensor 24 ist weitgehend genauso aufgebaut wie der in der Figur 5 gezeigte Sensor 24. Ein Unterschied ist lediglich darin zu sehen, daß sich die Membran 60 des Sensors nicht, wie in der Figur 5 gezeigt, in einem Hohlraum der Spindel 12 befindet, sondern daß vielmehr die Stirnfläche 40 der Spindel 12 als Membran 60 ausgebildet ist. Bei einem Bremsvorgang mit dem in der Figur 6 gezeigten Bremsaktuator 2 kommt es also zu einer "direkten" Verformung der Membran 60, die wiederum zu einer Änderung der Lichtintensität am Ausgang des zweiten Lichtleiters 56 führt. Im übrigen unterscheidet sich das Messverfahren der Zuspannkraft bei dem in der Figur 6 gezeigten Bremsaktuator nicht von dem Meßverfahren des in der Figur 5 gezeigten Bremsaktuators. Ein Sensor, wie er im Zusammenhang mit den Figuren 5 und 6 beschrieben worden ist, wird beispielsweise von der Firma OPTRAND, INC. 46155 Five Mile Rd., Plymouth, Michigan 48170, USA vertrieben.

### Bezugszeichenliste

- 2: Bremsaktuator
- 4: Elektromotor
- 6: Stator
- 8: Rotor
- 10: Zuspannvorrichtung
- 12: Spindel
- 14: Spindelmutter
- 16: Bremskolben
- 18: Bremssattel
- 20a,b: Bremsbelag
- 22a,b: Bremsbelagträger
- 24: Sensor
- 26: weichmagnetischer Kern bzw. ferromagnetischer Kern
- 28: Spulenkörper
- 30: Bremsscheibe
- 32: Anschlußleitung
- 34: permanentmagnetischer Kern
- 36: Hall-Sensor
- 38: Stange
- 40: Stirnfläche der Spindel 12
- 42: Stirnfläche des Bremskolbens 16
- 44: Vertiefung im Bremskolben 16
- 46: Feder
- 48: Anschlag
- 50: Bereich
- 52: Koppelglied
- 54: erster Lichtleiter
- 56: zweiter Lichtleiter
- 58: Kabel
- 60: Membran

## Patentansprüche

1. Elektrische Bremsanlage für ein Kraftfahrzeug, insbesondere für einen Personenkraftwagen, die u. a. über eine Radbremse für jedes Rad des Kraftfahrzeuges verfügt, der jeweils einen Bremsaktuator (2) mit u. a. einer Zuspannvorrichtung (10) zugeordnet ist, die bei einem Bremsvorgang auf Bremsbeläge (20a, 20b) der jeweiligen Radbremse eine Zuspannkraft ausübt, wodurch an dem Rad eine Bremskraft erzeugt wird, und mit einem Element (18), das die ausgeübte Zuspannkraft abstützt,
**dadurch gekennzeichnet**,
daß mindestens einer der Bremsaktuatoren (2) mindestens einen Sensor (24) aufweist, mit dem bei einem Bremsvorgang eine elastische Verformung der Zuspannvorrichtung (10) bzw. des Elementes (18) meßbar ist, aus der die ausgeübte Zuspannkraft bestimmbar ist.

2. Bremsaktuator für eine elektrische Bremsanlage mit u.a. einer Zuspannvorrichtung (10) die bei einer Betätigung des Bremsaktuators auf die Bremsbeläge (20a, 20b) eine Zuspannkraft ausübt und einem Element (18), das die ausgeübte Zuspannkraft abstützt, dadurch gekennzeichnet, daß der Bremsaktuator (2) mindestens einen Sensor (24) aufweist, mit dem bei Betätigung des Bremsaktuators eine elastische Verformung der Zuspannvorrichtung (10) bzw. des Elementes (18) meßbar ist, aus der die ausgeübte Zuspannkraft bestimmbar ist.

3. Elektrische Bremsanlage für ein Kraftfahrzeug bzw. Bremsaktuator nach einem der Ansprüche 1 bis 2, dadurch gekennzeichnet, daß zumindest ein Teil des Sensors (24) innerhalb der Zuspannvorrichtung (10) bzw. innerhalb des Elementes (18) angeordnet ist.

4. Elektrische Bremsanlage für ein Kraftfahrzeug bzw. Bremsaktuator nach einem der Ansprüche 1 bis 3, dadurch gekennzeichnet, daß die Steifigkeit der Zuspannvorrichtung (10) bzw. des Elementes (18), im Meßbereich des Sensors (24) verringert ist.

5. Elektrische Bremsanlage für ein Kraftfahrzeug bzw. Bremsaktuator nach einem der Ansprüche 1 bis 4, dadurch gekennzeichnet, daß der Sensor (24) derartig in den Bremsaktuator (2) eingebaut ist, daß er im kraftfreien Zustand der Zuspannvorrichtung (10) ein eineindeutiges Signal erzeugt.

6. Elektrische Bremsanlage für ein Kraftfahrzeug bzw. Bremsaktuator nach Anspruch 5, dadurch gekennzeichnet, daß der Sensor (24) aus mindestens zwei Teilen (26, 28) aufgebaut ist und daß ein Meßsignal von dem Sensor (24) nur dann erzeugt wird, wenn sich ein Teil (26) des Sensors im Wirkbereich des anderen Teiles (28) des Sensors befindet und daß der Sensor (24) derartig in den Bremsaktuator (2) eingebaut ist, daß sich der eine Teil (26) des Sensors (24) im kraftfreien Zustand nicht im Wirkbereich des anderen Teiles (28) des Sensors (24) befindet.

7. Elektrische Bremsanlage für ein Kraftfahrzeug bzw. Bremsaktuator nach einem der Ansprüche 1 bis 6, dadurch gekennzeichnet, daß der Sensor u. a. einen Spulenkörper (28) und einen ferromagnetischen Kern (26) enthält, wobei der ferromagnetische Kern (26) unter Einfluß der elastischen Verformung der Zuspannvorrichtung (10) bzw. des Elementes (18) relativ zu dem Spulenkörper (28) bewegbar ist, so daß in dem Spulenkörper (28) ein Meßsignal erzeugt wird.

8. Elektrische Bremsanlage für ein Kraftfahrzeug bzw. Bremsaktuator nach einem der Ansprüche 1 bis 6, dadurch gekennzeichnet, daß der Sensor (24) aus einem fluidgefüllten Hohlraum besteht, in dem ein Drucksensor (24) angeordnet ist, wobei der Druck in dem Fluid unter Einfluß der elastischen Verformung der Zuspannvorrichtung (10) bzw. des Elementes (18), veränderbar ist, was von dem Drucksensor (24) erfaßt werden kann.

9. Elektrische Bremsanlage für ein Kraftfahrzeug bzw. Bremsaktuator nach einem der Ansprüche 1 bis 6, dadurch gekennzeichnet, daß der Sensor (24) aus einem permanentmagnetischen (34) und einem ferromagnetischen Material besteht, wobei das ferromagnetische Material unter Einfluß des permanentmagnetischen Materials (34) magnetisierbar ist und wobei die Magnetisierung des ferromagnetischen Materials sich unter Einfluß der elastischen Verformung der Zuspannvorrichtung (10) bzw. des Elementes (18) ändert und diese Änderung meßbar ist.

10. Elektrische Bremsanlage für ein Kraftfahrzeug bzw. Bremsaktuator nach einem der Ansprüche 1 bis 6, dadurch gekennzeichnet, daß der Sensor (24) eine reflektierende Membran (60) enthält, auf die Licht geführt wird, das an der Membran (60) reflektiert wird, und daß die Membran (60) infolge der elastischen Verformung der Zuspannvorrichtung (10) bzw. des Elementes (18) verformbar bzw. verschiebbar ist.

11. Elektrische Bremsanlage für ein Kraftfahrzeug bzw. Bremsaktuator nach Anspruch 10, dadurch gekennzeichnet, daß der Sensor (24) zwei Lichtleiter (54) und (56) enthält, wobei mittels eines Lichtleiters (54) Licht auf die Membran geführt wird, das an der Membran reflektiert und danach in den anderen Lichtleiter (56) eingekoppelt wird.

12. Elektrische Bremsanlage für ein Kraftfahrzeug bzw. Bremsaktuator nach einem der Ansprüche 10 bis 11, dadurch gekennzeichnet, daß die Membran (60) innerhalb der Zuspannvorrichtung (10) bzw. innerhalb des Elementes (18) angeordnet ist.

13. Elektrische Bremsanlage für ein Kraftfahrzeug bzw. Bremsaktuator nach Anspruch 12, dadurch gekennzeichnet, daß die Membran (60) mit einem Koppelglied (52) in Wirkverbindung steht.

14. Elektrische Bremsanlage für ein Kraftfahrzeug bzw. Bremsaktuator nach einem der Ansprüche 10 bis 11, dadurch gekennzeichnet, daß die Stirnfläche (40) der Zuspannvorrichtung (10), mit der die Zuspannkraft auf die Bremsbeläge ausgeübt wird, die Membran (60) enthält bzw. als Membran (60) ausgebildet ist.
